# EUROPEAN PATENT APPLICATION

(11) **EP 2 364 842 A1**
(43) Date of publication of application: **14.09.2011**
(21) Application number: 09828980.4
(22) Date of filing: 12.11.2009
(51) Int. Cl.: B32B 15/01, B32B 9/00, B23K 20/00, B23K 20/04, C22C 23/02, C22F 1/00, C22F 1/06

(54) **MAGNESIUM ALLOY MEMBER**

(30) Priority: 25.11.2008 JP 2008299755
(71) Applicant: Sumitomo Electric Industries, Ltd., Osaka-shi, Osaka 541-0041 (JP)
(72) Inventor: NUMANO, Masatada, Osaka-shi Osaka 554-0024 (JP); INOUE, Ryuichi, Itami-shi Hyogo 6640016 (JP); OKUDA, Nobuyuki, Itami-shi Hyogo 6640016 (JP); KAWABE, Nozomu, Osaka-shi Osaka 554-0024 (JP); MORI, Koji, Itami-shi Hyogo 6640016 (JP); MORI, Nobuyuki, Itami-shi Hyogo 6640016 (JP); OISHI, Yukihiro, Osaka-shi Osaka 554-0024 (JP); KITAMURA, Takahiko, Itami-shi Hyogo 6640016 (JP)
(74) Representative: Setna, Rohan P.
(86) International application number: PCT/JP2009/069241
(87) International publication number: WO 2010/061732

(57) **Abstract**

A plurality of magnesium alloy parts are joined to one another through an inorganic joining layer (an reinforcing material 2, a boss 3, and a pin 4 are joined to a base material 1). Concrete examples of the inorganic joining layer include a layer of an inorganic adhesive and a metal thin film formed on the magnesium alloy part at the time of hot cladding. Because the magnesium alloy parts are joined together through the inorganic joining layer, in comparison with the case where a reinforcing material and the like are formed by machining, waste of the material can be reduced. The use of the inorganic joining layer can produce a magnesium alloy joined part that does not generate hazardous smoke and soot even when it is melted for recycling.

## Description

### Technical Field

The present invention relates to a magnesium alloy joined part, particularly a magnesium alloy joined part that can minimize the amount of use of an organic material.

### Background Art

Magnesium alloy, which is lightweight and high in specific strength, has so far been used for the housing case of mobile devices, such as a cellular phone and a notebook personal computer, and a structural material for an automobile's parts and the like. In the use of a magnesium alloy joined part, a base material is sometimes provided with a reinforcing material and a pin to be used for partitioning or positioning.

When a magnesium alloy base material is provided with a reinforcing material, it is conceivable to form, by machining, the reinforcing material as a body unified with the base material (Patent Literature 1). When a base material is provided with a reinforcing material or pin, it is also conceivable to join them to the base material. The types of the concrete means of the joining include a means of sticking a reinforcing material or pin to the base material with an organic adhesive sheet and a means of joining together the objects to be joined by using a bolt and nut.

### Summary of Invention

### Technical Problem

Despite the above description, in the forming of a reinforcing material by machining, a large amount of magnesium alloy is removed by machining, so that the production efficiency is decreased. In addition, the production and scattering of the chips should be avoided in terms of environment and safety.

On the other hand, in the joining by the use of an organic adhesive sheet, at the time of the recycling of a magnesium alloy joined part, the melting of the joined part, for example, generates a hazardous gas and smoke and soot, thereby creating a problem in terms of environment.

Furthermore, in the joining by the use of a bolt and nut, not only is the number of parts increased but also the joining operation becomes complicated when the joining places are increased.

In light of the foregoing circumstances, the present invention is made. An object of the present invention is to offer a magnesium alloy joined part that enables the joining together of the objects to be joined with high productivity.

Another object of the present invention is to offer a magnesium alloy joined part that does not generate a hazardous gas, smoke and soot, or the like at the time of the recycling.

### Solution to Problem

The magnesium alloy joined part of the present invention has a plurality of magnesium alloy parts joined to one another through an inorganic joining layer.

According to this structure, because the magnesium alloy parts are joined together through the inorganic joining layer, in comparison with the case where a reinforcing material and the like are formed by machining, waste of the material can be reduced. In addition, the use of the inorganic joining layer prevents hazardous smoke and soot from being generated even when the magnesium alloy joined part is melted for recycling. Furthermore, in comparison with the case where the joining is performed by using a bolt and nut, the number of parts is not increased and even when the number of joining places is increased, the joining operation can be relatively easy to perform.

In the magnesium alloy joined part of the present invention, it is desirable that the above-described inorganic joining layer contain at least one member selected from the group consisting of Al, Si, Cu, Fe, and Ni.

According to this composition, by forming a joining layer containing at least one member selected from the group consisting of Al, Si, Cu, Fe, and Ni, a joining can be conducted that has excellent joining strength and heat resistance.

In particular, it is desirable that the above-described inorganic joining layer have at least one member selected from the group consisting of an oxide of Al and an oxide of Si.

According to this composition, a plate material and a reinforcing material can be joined together through a joining layer having particularly high heat resistance.

In the magnesium alloy joined part of the present invention, it is desirable that the joined magnesium alloy parts have a joining strength of 100 MPa or more.

According to this structure, magnesium alloy parts can be joined together with high strength.

In the magnesium alloy joined part of the present invention, at least one of the joined magnesium alloy parts may be made of a rolled plate.

According to this structure, because at least one of the objects to be joined is a rolled plate, in comparison with the case where a cast metal plate is used, a magnesium alloy joined part can be obtained that has high strength and excellent surface smoothness.

In the magnesium alloy joined part of the present invention, it is desirable that the above-described rolled plate contain 3.5 mass % or more Al.

According to this composition, a magnesium alloy joined part can be obtained that has sufficient strength and high corrosion resistance.

### Advantageous Effect of Invention

The magnesium alloy joined part of the present invention does not generate a hazardous gas or smoke and soot at the time of the recycling.

### Brief Description of the Drawings

Figure 1A is a perspective view showing the magnesium alloy joined part in an embodiment of the present invention.
Figure 1B is a cross-sectional view showing the magnesium alloy joined part in an embodiment of the present invention.
Figure 2 is a perspective view showing the stay in an embodiment of the present invention.
Figure 3 is a perspective view showing the magnesium alloy joined part in Example 1.

### Description of Embodiments

An explanation is given below to embodiments of the present invention. In the explanation of the drawing, the same element bears the same sign to eliminate duplicated explanations. The ratio of the dimensions in the drawing does not necessarily coincide with that of the explanation.

### Magnesium alloy joined part

In the magnesium alloy joined part of the present invention, the objects to be joined are a plurality of magnesium alloy parts. The alloy parts are joined through an inorganic joining layer.

### Object to be joined

In the present invention, the individual objects to be joined are composed of magnesium alloy. The magnesium alloy can have a varied chemical composition including an element added to Mg (the remainder: Mg and impurities). The types of magnesium alloy include, for example, an Mg-Al-based alloy, Mg-Zn-based alloy, Mg-RE (rare-earth element)-based alloy, and Y-added alloy. In particular, an Mg-Al-based alloy, which contains Al, has high corrosion resistance. The types of Mg-Al-based alloy include, for example, as in the Standards of American Society for Testing and Material (ASTM), AZ-family alloy (Mg-Al-Zn-based alloy, Zn: 0.2 to 1.5 mass %), AM-family alloy (Mg-Al-Mn-based alloy, Mn: 0.15 to 0.5 mass %), AS-family alloy (Mg-Al-Si-based alloy, Si: 0.6 to 1.4 mass %), and Mg-Al-RE (rare-earth element)-based alloy. It is desirable that the Al content be 1.0 to 11 mass %, more desirably 3.5 mass % or more. It is particularly desirable to use an Mg-Al-based alloy that contains Al at 8.3 to 9.5 mass % and Zn at 0.5 to 1.5 mass % with the remainder composed of Mg and impurities. AZ91 alloy, which is a representative example of the foregoing Mg-Al-based alloy, has excellent corrosion resistance and mechanical properties such as strength and plastic-deformation resistance in comparison with AZ31 alloy and other Mg-Al-based alloys.

Because AZ91 described above has excellent corrosion resistance, when it is used for a joined part at a location unexposed to the outside, such as a joined part placed at the inner surface of a housing case and a joined part housed in the housing case, the joined parts are sometimes allowed to be used without painting or without being provided with an anticorrosion coating. When no painting or anticorrosion coating is formed, their forming processes can be omitted. In addition, when no painting or the like is provided, an organic solvent, which is usually included in the paint or the like, does not exist either. Consequently, when a magnesium alloy joined part is recycled, the generation of a hazardous gas and smoke and soot can be suppressed. The types of anticorrosion coating include a chemically converted film and an anodized coating.

It is desirable that the magnesium alloy parts to be joined be formed of magnesium alloy having the same chemical composition or belonging to the same family. When the joining is performed between the magnesium alloys having the same chemical composition or belonging to the same family, the alloys have nearly the same linear thermal expansion coef ficient. Consequently, when heat treatment is performed on the alloy parts or alloy joined parts, the alloy parts have nearly the same amount of expansion or contraction. As a result, the joining operation is easily carried out and the alloy parts are firmly joined.

The production process of the magnesium alloy parts to be joined is not particularly limited. Any process of casting, rolling, extrusion, drawing, and so on can be accepted. A cast material is suitable for producing an alloy part having a complicated shape. A rolled material is suitable for producing a flat plate having high strength and excellent surface smoothness. Extrusion is suitable for producing a long material having a varied cross section. Drawing is suitable for producing a wire. Of course, the alloy part may be a rolled plate produced by rolling a cast material, a rolled plate produced by rolling an extruded material, an extruded material produced by extruding a cast material, or a drawn material produced by drawing a cast material. When the alloy part is a cast plate, it is desirable to use a cast plate produced by a continuous-casting process such as a twin-roll casting process, particularly the casting process stated in WO 2006/003899. When the alloy part is a rolled plate, it is desirable to use a rolled plate produced by the rolling process stated in the published Japanese patent application Tokukai 2007-98470, for example.

The shape of the magnesium alloy parts to be joined is not particularly limited. Various shapes may be selected such as a flat-plate shape, bent-plate shape, cylindrical shape, bar shape, block shape, and so on. When required, the object to be joined may have a more complex shape formed by performing a plastic working, such as a deep-drawing and a bending work, or a cutting or grinding processing.

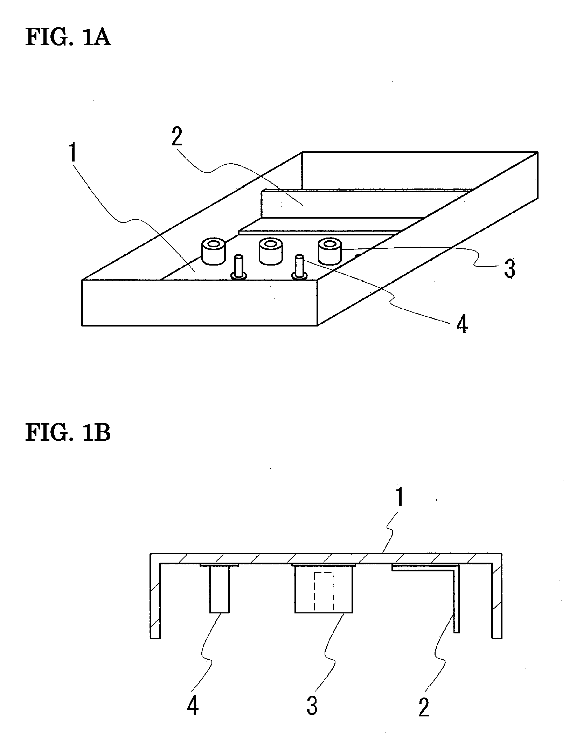

For example, as shown in Figs. 1A and 1B, one alloy part can be the bottom plate of a tray-shaped base material 1 and the other alloy part can be a reinforcing material 2 that is L-shaped to reinforce the foregoing bottom plate. In addition, the other alloy part can be a boss 3 having the shape of a hollow cylinder or a pin 4 having the shape of a bar. In particular, an internal thread may be formed at the inner surface of the boss 3, which has the shape of a hollow cylinder, so that an external thread can be screwed into the internal thread.

When one alloy part has the shape of a flat plate, the other alloy part can be easily joined to it stably and firmly. When one alloy part is a plate material, the thickness of the plate material is not particularly limited. Nevertheless, it is desirable that the thickness be 2.0 mm or less, particularly 1.5 mm or less, more desirably 1.0 mm or less. In the above-described range, the thicker plate material has higher strength and the thinner plate material is more suitable for a thin, lightweight housing case. The thickness of the plate material can be selected according to the purpose of the magnesium alloy joined part.

When one alloy part is a plate material and the other alloy part is a reinforcing material for the plate material, it is undesirable that the plate material have a length excessively longer than that of the reinforcing material. In particular, when the longitudinal length of the reinforcing material is denoted as Lr and the length of the plate material along the reinforcing material is denoted as Lb, it is desirable that the ratio of the lengths of the two materials, Lr/Lb, be 0.8 or more. When a reinforcing material is joined to an extremely small part of a broad plate material, the effect of the function of reinforcement is negligible. Consequently, in order to reinforce a plate material with a reinforcing material, it is necessary to join the reinforcing material to the plate material across a wide area to some extent. To meet this requirement, when the above-described ratio Lr/Lb has a value of 0.8 or more, the reinforcing material can exert sufficient function of reinforcement to increase the rigidity of the plate material. Of course, the joining surfaces of the plate material and the reinforcing material may be joined together locally. Nevertheless, it is desirable to join the entire surfaces.

When the plate material itself has a large size to a certain extent, the necessity of joining the reinforcing material is high. When the plate material is small, the necessity of reinforcing it is low. Consequently, when the plate material has a length of 10 cm or more (50 or more times the thickness of the plate material), the effectiveness of joining the reinforcing material is high.

The shape of the reinforcing material is required only to have an ability to reinforce the plate material and therefore is not particularly limited. Theoretically, a flat plate-shaped reinforcing material may be surface-joined to the plate material. Practically, it is desirable, however, to use a reinforcing material 2 having the shape in which a protruding portion protrudes in a direction perpendicular to the plate material. Typical examples include a long material having an L-shaped cross section as shown in Fig. 1B and T- and I-shaped long materials. In particular, in a state in which a reinforcing material is joined to a plate material, it is desirable that the reinforcing material have a shape that has a portion in which the height of the reinforcing material protruding from the surface of the plate material is at least two times the thickness of the plate material. Generally, one operation, such as the forging of a plate material, alone practically cannot form on the plate material a protruding portion that has a height at least two times the thickness of the plate material. Even when a low protruding portion is formed by the forging, the portion of the plate material around the protruding portion becomes thin locally. On the other hand, the present invention allows free selection of the height of the reinforcing material. Consequently, by joining a reinforcing material having a height at least two times the thickness of a plate material, high reinforcing performance can be achieved. Of course, no thinning occurs at the portion of the plate material around the reinforcing material.

In all cases of a flat plate-shaped reinforcing material and reinforcing materials having T-, L-, and I-shaped cross section, a suitable through hole may be formed as required in at least one of the joining portion to be joined to the plate material and the protruding portion to such an extent that the strength of the reinforcing material can be maintained. The formation of the through hole enables the weight reduction of the reinforcing material. The through hole can also be used as a screw hole.

For the arranging pattern of the reinforcing materials on the plate material, it is desirable that long reinforcing materials be joined to the plate material continuously in the direction of the length of the plate material. When a plurality of short reinforcing materials are joined to the plate material with spacing, the reinforcing effect is low. On the other hand, when long reinforcing materials are joined to the plate material continuously, good reinforcing performance can be achieved.

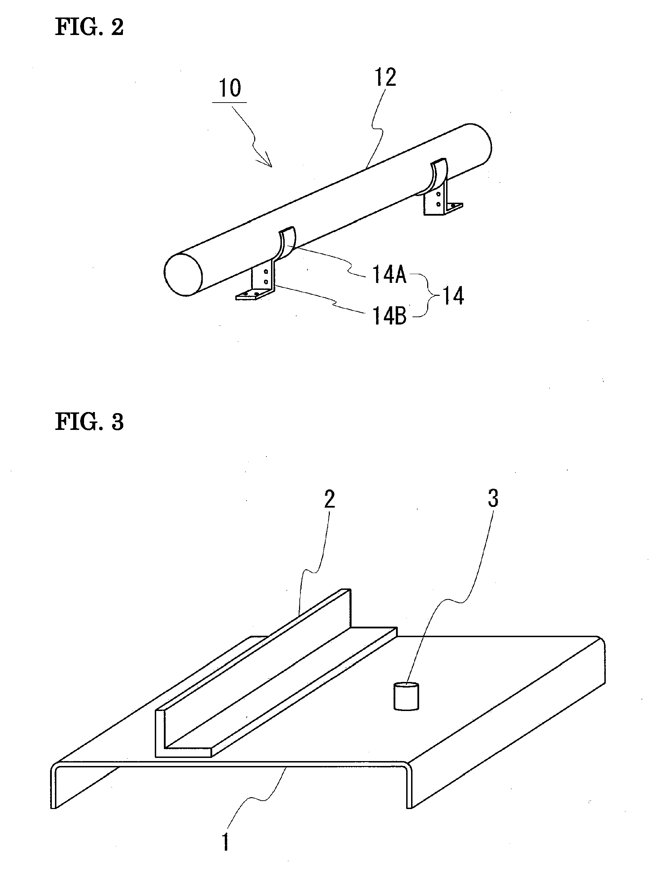

Another concrete example of the magnesium alloy joined part is a stay 10 shown in Fig. 2. The stay 10 has a structure in which supporting joined parts 14 hold a pipe-shaped bar 12 at two locations in the vicinity of both ends. The bar 12 and the supporting joined part 14 are formed of magnesium alloy and joined together. The supporting joined part is composed of an arc portion 14A, which matches with the cylindrical surface of the bar 12, and an L-shaped portion 14B, which is positioned continuously with the arc portion 14A. As described above, even the surfaces to be joined are curved, the magnesium alloy parts can be joined together without a problem.

### Inorganic joining layer

An inorganic joining layer joins the above-described magnesium alloy parts together. The inorganic joining layer is composed practically of inorganic material alone with no organic material being contained. Consequently, even when the magnesium alloy joined part is melted at the time of recycling, hazardous smoke and soot and the like are not generated. The inorganic joining layer is formed of a material different from at least one of the magnesium alloy parts. In addition, the inorganic joining layer is formed without deforming the magnesium alloy parts. This forming method prevents the magnesium alloy parts from becoming thin in the vicinity of the joined portion.

It is desirable that the joined magnesium alloy parts have a joining strength of 100 MPa or more, particularly 150 MPa or more. In other words, an inorganic joining layer is formed that can have the above-described joining strength. The joining strength can be measured as described below. First, the joined portion is cut. Second, a holding portion formed of a bar or plate material is attached to the two surfaces at the rear of the interface of the joining through a bonding method that attains a strength higher than that of the interface of the joining, such as stud welding. Then, a tensile test is conducted by pulling the two holding portions in the opposite directions. Such an inorganic joining layer is formed, for example, by a joining method described below.

### Others

The magnesium alloy joined part of the present invention may be provided with an anticorrosion coating or a film of painting. The providing of at least one of them can not only increase the corrosion resistance but also render the appearance of the alloy joined part good.

In particular, it is desirable that 99 weight % or more of the magnesium alloy joined part, except for the foregoing anticorrosion coating and film of painting, be composed of magnesium alloy. This composition can avoid an excessive enlargement of the joining layer formed of an inorganic material.

It is desirable that the magnesium alloy joined part of the present invention be composed of a magnesium alloy having an average crystal grain diameter of 40 µm or less, more desirably 20 µm or less, preferably 10 µm or less. The use of a magnesium alloy having an extremely small average crystal grain diameter as described above can increase the strength of the magnesium alloy part and by extension the strength of the magnesium alloy joined part.

### Joining method of the magnesium alloy part

It is desirable that the above-described magnesium alloy parts be joined together through adhesion with the use of an inorganic adhesive or through joining by hot cladding.

### Inorganic adhesive

The types of inorganic adhesive include adhesives containing Al and Si. The adhesive becomes an inorganic joining layer after the joining of the magnesium alloy parts. More specifically, the foregoing types include an adhesive containing at least one of an oxide of Al and an oxide of Si. Such an inorganic adhesive has not only a sufficient adhering strength but also high heat resistance. Consequently, as described below, the magnesium alloy joined parts can undergo various heat treatments.

### Hot cladding

Hot cladding is a method of joining together alloy parts to be joined by heating and pressing them. Usually, a metal thin film is formed on the joining surface of at least one of the alloy parts to be joined. The metal thin film becomes an inorganic joining layer after the joining of the magnesium alloy parts. It is desirable that the metal thin film be composed of a metal that has higher plastic deformability and resistance to oxidation than those of the magnesium alloy. More specifically, the types of metal include at least one of Cu, Fe, and Ni. It is desirable that the metal thin film, which is composed of a single layer or multiple layers, have a thickness of 0.1 to 10 µm or so. When the thickness is less than 0,1µm, it is difficult to achieve sufficient joining strength. When the thickness is more than 10µm, this condition only increases the thickness of the metal thin film excessively and it is difficult to increase the joining strength further. The types of means of forming the metal thin film include film formation by plating, physical vapor deposition, and chemical vapor deposition. Of these means, plating is more suitable. The types of concrete method of plating include electroplating and electroless plating.

At the time of the performing of hot cladding, it is desirable that the objects to be joined be heated at a temperature of 80°C or more and 350°C or less. When the temperature is less than 80°C, it is difficult to join the magnesium alloy parts together. When the temperature is more than 350°C, problems are sometimes occurred, such as the decrease in strength resulting from the coarsening of the crystal grain of magnesium. It is desirable that the pressure welding be performed at a pressure of 20 to 80 MPa or so. When the pressure is less than 20 MPa, it is difficult to join the magnesium alloy parts together with sufficient strength. When the pressure is more than 80 MPa, it is difficult to expect the increase in the joining strength.

### Pretreatment

Before performing the joining together of the magnesium alloy parts, it is desirable that the objects to be joined be subjected to degreasing treatment. The degreasing treatment enables firm joining together of the objects to be joined.

### Plastic working

At least one of the magnesium alloy parts may undergo plastic working before or after the joining. The type of the plastic working is not particularly limited. For example, deep drawing, bulging, and bending are available.

When the plastic working is performed before joining the alloy parts together, the alloy parts have a relatively simple shape at the time of the plastic working, although the alloy parts have a relatively complicated shape at the time of the joining in many cases. Consequently, the operation of the plastic working before the joining is easy to carry out and therefore the degree of freedom is high for selecting the type of the plastic working. On the other hand, when the plastic working is performed after joining the alloy parts together, the alloy parts have a relatively simple shape at the time of the joining, although the joined body of the alloy parts has a relatively complicated shape at the time of the plastic working in many cases. Consequently, the operation of the joining before the plastic working is easy to carry out.

When the plastic working is performed after joining the alloy parts together, it is desirable that the plastic working be performed such that in one of the alloy parts, the plastic deformation is created in the region where the other alloy part is not present. For example, as shown in Figs. 1A and 1B, when a tray-shaped formed body (the base material 1) is produced that has a rectangular bottom plate and a side plate extending from each side of the bottom plate, a rectangular blank plate is used and the reinforcing material 2 is joined only to the blank plate's portion to form the bottom plate of the tray after the forming. At the time of the forming, the forming tool, such as a punch and die, is required to have a notch to avoid interference with the reinforcing material 2.

It is desirable that the plastic working be performed at a temperature range of 150°C to 350°C so that the plastic deformability of the object to be processed can be increased. When the plastic working is performed at the foregoing temperature range, the object to be processed will be less likely to develop a crack and other defects caused by the plastic deformation. In particular, it is desirable that the plastic working be performed at a temperature range of 150°C to 300°C, more desirably 250°C to 280°C. The above-described temperature range can suppress the strength reduction of the object to be processed during the plastic working.

### Heat treatment

It is desirable that the magnesium alloy joined part of the present invention be subjected to heat treatment. Because an inorganic additive usually contains an organic solvent and water, it is desirable to perform heat treatment in order to remove the organic solvent and water. The removal of the organic solvent enables the joining layer to be composed practically of inorganic material alone. The removal of water can increase the corrosion resistance in the vicinity of the joining layer. It is desirable that the joined portion of the magnesium alloy parts be heat-treated at a temperature of 80°C or more and 350°C or less. The heat treatment temperature of 80°C or more enables the sufficient removal of the organic solvent and water in a short time. The heat treatment temperature of 350°C or less prevents the deformation owing to the softening of the magnesium alloy and suppresses the strength reduction resulting from the coarsening of the crystal grain diameter of the magnesium alloy. A long heat-treating time, during which the foregoing heat treatment temperature is maintained, can sufficiently remove the organic solvent. Nevertheless, if the treating time is excessively long, the productivity of the alloy joined part is decreased. Consequently, it is desirable that the treating time be 30 minutes or less, particularly 5 minutes or less or so. Whether the joining layer is composed practically of inorganic material alone can be confirmed, for example, by detecting, with gas chromatography or the like, the presence or absence of a gas generated at the time of the heating of the joined body including the joining layer.

On the other hand, when the joining together of the magnesium alloy parts is performed by hot cladding, an organic solvent and the like are not used fundamentally. Consequently, the heat treatment for removing an organic solvent and the like can be omitted.

In addition, the formed body after the above-described plastic working may be subjected to heat treatment to remove the strain produced at the time of the plastic working.

### Example 1

### Magnesium alloy joined part

As shown in Fig. 3, a reinforcing material 2, which had a chemical composition equivalent to that of AZ91, was joined to a base material 1, which was a press-formed plate and had a chemical composition equivalent to that of AZ91 or AZ31 to produce the below-described samples. The individual samples underwent examinations of recyclability, heat resistance, appearance, production time, and corrosion resistance.

The sample was composed of a press-formed plate, which was produced by press-forming both end portions at nearly a right angle to obtain the shape shown by the sign 1 in Fig. 3, and a reinforcing material 2 having an L-shaped cross section and a hollow cylindrical boss 3, both of which were joined to the formed plate at its top surface. In this case, the reinforcing material 2 was joined to the formed plate in the direction along the width of the formed plate. The rectangular plate before the press forming of the formed plate was obtained as follows. First, a plurality of cast plates (thickness: 4 mm) were prepared that were obtained by a twin-roll continuous-casting process. Each obtained cast plate was subjected to a plurality of times of rolling until its thickness reached 0.5 mm under the following rolling conditions: rolling temperature: 150°C to 250°C; plate temperature: 200°C to 400°C; and rolling reduction per pass: 10% to 50%. The obtained rolled plate was subjected to die-cutting processing to prepare a blank plate (plate material) for the press forming. The plate material had the following size: width: 150 mm; length: 300 mm; and thickness: 0.5 mm.

The reinforcing material 2 was prepared by the method described below. A rectangular plate having a thickness of 0.6 mm, a width of 10 mm, and a length of 150 mm was die-cut from a rolled plate having a chemical composition equivalent to that of AZ91. The rectangular plate was press-formed to have an L shape. The L-shaped body had a joining portion that was to be joined to the formed plate and that had a width of 8 mm and a protruding portion that protruded from the surface of the formed plate in a direction perpendicular to the surface when the reinforcing material was joined to the formed plate and that had a height of 2 mm. For both of the formed plate and the reinforcing material 2, the temperature of the object to be processed was 280°C at the time of the press forming. When the longitudinal length of the reinforcing material 2 was denoted as Lr and the length of the base material 1 in a direction along the reinforcing material 2 was denoted as Lb, Lr = 150 mm and Lb = 150 mm, and the ratio of the lengths of the two materials, Lr/Lb, was 1.0. Both of the formed plate and the reinforcing material 2 were not subjected to anticorrosion treatment or painting. The boss 3 was formed of a cast material having a chemical composition equivalent to that of AZ91 and had an outer diameter of 5 mm and a height of 5 mm.

### Joining method

The reinforcing material and boss were joined to the above-described formed plate by four different methods described below.

### (1) Inorganic adhesive

An inorganic adhesive was applied to the reinforcing material's and boss's joining surfaces to be joined to the formed plate. The joining surfaces were pressed against the formed plate to be joined. An inorganic adhesive used was the heat-resistant inorganic adhesive Three Bond 3732 made by Three Bond Co., Ltd. The adhesive was composed mainly of aluminum oxide. After the reinforcing material and boss were joined to the formed plate, the joined body was subjected to heat treatment to remove an organic solvent (an alcohol-based solvent) in the inorganic adhesive. The heat treatment was conducted at 200°C for 20 minutes.

### (2) Organic adhesive

An organic adhesive was applied to the reinforcing material's and boss's joining surfaces to be joined to the formed plate. The joining surfaces were pressed against the formed plate to be joined. The organic adhesive was CEMEDINE 110 made by CEMEDINE Co., Ltd.

### (3) Spot welding

The joining surfaces of the reinforcing material and boss were placed at predetermined positions on the formed plate to perform spot welding. In this case, the spot welding was performed at three locations at the joining surface of the reinforcing material and one location at the joining surface of the boss.

### (4) Hot cladding

Cu plating and Ni strike plating were performed successively on the reinforcing material and boss through electroplating. The plated surfaces of the reinforcing material and boss were pressed against the formed plate to conduct pressure welding at a pressure of 60 MPa in an atmosphere at about 300°C. The total thickness of the Cu plating and Ni strike plating was 4 µm.

### Samples

Sample 1-1: After the rectangular plate made of AZ91 was press-formed into the shape shown by the sign 1 in Fig. 3, the reinforcing material and boss were joined to the press-formed plate by using the inorganic adhesive.

Sample 1-2: After the rectangular plate made of AZ91 was press-formed into the shape shown by the sign 1 in Fig. 3, the reinforcing material and boss were joined to the press-formed plate by using the organic adhesive.

Sample 1-3: After the rectangular plate made of AZ91 was press-formed into the shape shown by the sign 1 in Fig. 3, the reinforcing material and boss were joined to the press-formed plate through the spot welding.

Sample 1-4: After the rectangular plate made of AZ91 was press-formed into the shape shown by the sign 1 in Fig. 3, the reinforcing material and boss were joined to the press-formed plate through the hot cladding.

Sample 1-5: After the rectangular plate made of AZ31 was press-formed into the shape shown by the sign 1 in Fig. 3, the reinforcing material and boss were joined to the press-formed plate by using the inorganic adhesive.

Sample 1-6: After the rectangular plate made of AZ61 was press-formed into the shape shown by the sign 1 in Fig. 3, the reinforcing material and boss were joined to the press-formed plate by using the inorganic adhesive.

### Evaluation method

The above-described samples underwent the following evaluations. The results are summarized in Table I.

Recyclability: The sample was pulverized into small particles, put into a carbon crucible, and melted in an Ar atmosphere. The chemical composition before and after the melting was analyzed through atomic-emission spectrometry with inductively coupled plasma (ICP) to examine the state of variation in chemical composition. When the sample had unusual odor resulting from the generation of gas during the melting or showed a variation in chemical composition, the sample was judged to be unsatisfactory. The sample free from these undesirable results was judged to be satisfactory.

Heat resistance: A test piece of a cube of 2 cm on its side was cut from the sample such that the joined portion was included. The test piece was maintained in an environment at 150°C for 100 hours to examine the presence or absence of the separation at the joined portion. When the separation was absent, the sample was judged to be satisfactory. When the separation was present, the sample was judged to be unsatisfactory.

Appearance: The appearance was inspected by visually observing the joined portion of the sample to examine the presence or absence of a weld nodule and other defects. When a weld nodule was absent, the sample was judged to be satisfactory. When a weld nodule was present, the sample was judged to be unsatisfactory.

Production time: The time for producing 100 samples was measured to calculate the production time (second) per sample. In this case, the time of heat treating for removing the organic solvent from the inorganic adhesive was excluded from the production time for the sample because it was long.

Corrosion resistance: A test piece of a cube of 2 cm on its side was cut from the sample such that the joined portion was included. The test piece was subjected to a salt spray test for 24 hours to examine the state of corrosion. When no corrosion was recognized, the sample was judged to be satisfactory. When corrosion was recognized, the sample was judged to be unsatisfactory.

**Table I**

| Sample | Recyclability | Heat resistance | Appearance | Production time (sec) | Corrosion resistance |
|---|---|---|---|---|---|
| 1-1 | ○ | ○ | ○ | 3 | ○ |
| 1-2 | × | × | ○ | 3 | ○ |
| 1-3 | ○ | ○ | × | 20 | ○ |
| 1-4 | ○ | ○ | ○ | 30 | ○ |
| 1-5 | ○ | ○ | ○ | 3 | × |
| 1-6 | ○ | ○ | ○ | 3 | ○ |

| | | | | | |
|---|---|---|---|---|---|
| ○: Satisfactory; ×: Unsatisfactory | | | | | |

As shown in Table I, Sample 1-1, which was joined by using an inorganic adhesive, showed good results in all of the recyclability, heat resistance, appearance, production time, and corrosion resistance. After the curing, the inorganic adhesive had the following properties: linear thermal expansion coefficient: 75 × 10⁻⁷/°C; and Vickers hardness (0.2 kgf): 200 Hv. Sample 1-4, which was joined through hot cladding, showed good results in the recyclability, heat resistance, appearance, and corrosion resistance, although its production time was slightly inferior to that for Sample 1-1. On the other hand, Sample 1-2, which was joined by using an organic adhesive, was unsatisfactory in the recyclability and heat resistance. Sample 1-3, which was joined through spot welding, was unsatisfactory in the appearance. The mass percentage of the magnesium alloy in the test piece was as follows: Sample 1-2 (an organic adhesive): less than 99%; Sample 1-1 (an inorganic adhesive) and Sample 1-4 (hot cladding): 99% or more; and Sample 1-3 (spot welding): 100%. The magnesium alloy forming the test piece had an average crystal grain diameter of 20 µm or less.

### Example 2

Next, a test piece including the joined portion between the formed plate and the reinforcing material was cut from Samples 1-1 and 1-4 in Example 1. A bar-shaped body to be used as the holding portion was welded to the surfaces of the formed plate and the reinforcing material. The two materials were separated by pulling the holding portions in the opposite directions to measure the tension required to separate them. The joining strength was calculated by dividing the tension by the joining area between the formed plate and the reinforcing material in the test specimen. The joining area between the formed plate and the reinforcing material was 12 mm². The results showed that Sample 1-1 had a joining strength of 300 MPa and Sample 1-4, 200 MPa. The results confirmed that both samples had a sufficient strength.

The above-described embodiments can be modified as appropriate without deviating from the gist of the present invention. It is to be considered that the present invention is not limited to the above-described structure, constitution, or composition.

### Industrial Applicability

The magnesium alloy joined part of the present invention can be suitably applied to the housing case of an electronic device and the chassis, stay, and the like of an industrial machine, automobile, and so on.

### Explanation of Signs

1: base material
2: reinforcing material
3: boss
4: pin
10: stay
12: bar
14: supporting joined part
14A: arc portion; 14B: L-shaped portion

### Citation List

### Patent Literature

Patent Literature 1: the published Japanese patent application Tokukai 2002-018626

## Claims

1. A magnesium alloy joined part, comprising a plurality of magnesium alloy parts joined to one another through an inorganic joining layer.

2. The magnesium alloy joined part as defined by claim 1, wherein the inorganic joining layer contains at least one member selected from the group consisting of Al, Si, Cu, Fe, and Ni.

3. The magnesium alloy joined part as defined by claim 2, wherein the inorganic joining layer comprises at least one member selected from the group consisting of an oxide of Al and an oxide of Si.

4. The magnesium alloy joined part as defined by any of claims 1 to 3, wherein the joined magnesium alloy parts have a joining strength of 100 MPa or more.

5. The magnesium alloy joined part as defined by any of claims 1 to 4, wherein at least one of the joined magnesium alloy parts is a rolled plate.

6. The magnesium alloy joined part as defined by claim 5, wherein the rolled plate contains 3.5 mass % or more Al.
